# EUROPÄISCHE PATENTSCHRIFT

(11) **EP 1 028 028 B1**
(45) Veröffentlichungstag und Bekanntmachung des Hinweises auf die Patenterteilung: **02.11.2005**
(21) Anmeldenummer: 00102672.3
(22) Anmeldetag: 09.02.2000
(51) Int. Cl.: B60Q 7/00

(54) **Zusammenlegbares Warndreieck**
Foldable warning triangle
Triangle de signalisation pliable

(30) Priorität: 12.02.1999 DE 29902459 U
(43) Veröffentlichungstag der Anmeldung: 16.08.2000
(73) Patentinhaber: Leina-Werke GmbH, 51570 Windeck-Rosbach (DE)
(72) Erfinder: Pluhacek, Pavel Ing., Vracov (CZ)
(74) Vertreter: Herden, Andreas F.

(56) Entgegenhaltungen:
- EP-A- 0 078 520
- EP-A- 0 688 696
- DE-A- 4 435 964
- DE-A- 19 508 436
- DE-U- 1 973 327
- DE-U- 1 998 435
- DE-U- 29 613 446
- FR-A- 2 280 159

## Beschreibung

Die Erfindung betrifft ein zusammenlegbares Warndreieck, insbesondere ein Warndreieck für Kraftfahrzeuge.

Derartige Warndreiecke werden üblicherweise am Straßenrand aufgestellt, um den nachfolgenden Verkehr auf eine Gefahrenstelle aufmerksam zu machen. Dabei wird das Warndreieck in nur kurzer seitlicher Beabstandung zum fließenden Straßenverkehr aufgestellt. Neben gewöhnlichen Windböen können somit auch die vom Verkehr hervorgerufenen Windstöße das Warndreieck aus seiner Warnstellung herausschieben oder sogar umwerfen.

Um eine große Standfestigkeit des Warndreiecks zu gewährleisten, kann beispielsweise das Eigengewicht der Vorrichtung entsprechend hoch bemessen werden. Eine derartige Maßnahme ist jedoch in der heutigen Zeit, insbesondere im Hinblick auf angestrebte Gewichtsreduzierungen in allen Bereichen des Kraftfahrzeugbaus zur Senkung des Kraftstoffverbrauchs, kontraproduktiv.

Die DE 1973327 zeigt ein zusammenklappbares Warndreieck gemäß dem Oberbegriff des Anspruchs 1, mit auf einem Horizontalträger angeordneten Schenkelplatten, welches eine erhöhte Standfestigkeit auch bei hohen Windstärken haben soll.

Die DE 4435964 zeigt mit gewinkelter Trageinrichtung, an der vier Beine mit jeweils einem Lager angeschlagen sind.

Der Erfindung liegt die Aufgabe zugrunde, ein zusammenlegbares Warndreieck bereitzustellen, welches eine erhöhte Standfestigkeit aufweist ohne das Eigengewicht der Vorrichtung zu erhöhen.

Dies wird mit einem erfindungsgemäßen Warndreieck mit den Merkmalen des Anspruchs 1 erreicht. Dabei umfaßt das Warndreieck eine Trägereinrichtung und Beine, welche die Trägereinrichtung tragen, sowie eine Signaleinrichtung, die an der Trägereinrichtung befestigt ist, wobei die Trägereinrichtung und/oder die Beine aerodynamisch derart geformt sind, daß die spezielle Formgebung eine Erhöhung der Bodenhaftung zur Folge hat.

Weitere Ausbildungen der Erfindung sind in den Unteransprüchen angegeben.

Um eine einfache und kostengünstige Herstellung des Warndreiecks sicherzustellen, kann bzw. können die Trägereinrichtung und/oder die Beine jeweils aus einem Blech, beispielsweise einem Flachblech gebildet sein, welches zumindest abschnittsweise an den Rändern gewölbt geformt ist, um einen dynamischen Abtrieb zu erzeugen. Dabei bezeichnet der Ausdruck "dynamischer Abtrieb" allgemein den Fall, daß bei einer an das Warndreieck angreifenden, im wesentlichen parallel zur Standfläche verlaufenden Windströmung eine Kraft erzeugt wird, die eine Erhöhung der Bodenhaftung des Warndreiecks zur Folge hat. Die beschriebene Formung der Bauteile hat zusätzlich den Vorteil, daß die mechanische Stabilität des Warndreiecks zunimmt, wodurch weiterhin Material und damit Gewicht eingespart werden kann. Sind die genannten Teile Stanzteile, so läßt sich die Formung gleichzeitig mit dem Ausstanzen realisieren, was zusätzlich den Herstellungsprozeß vereinfacht.

Um die Standfestigkeit weiter zu erhöhen, können benachbart zu beiden Enden der Trägereinrichtung in Form einer langgestreckten Grundplatte jeweils zwei Beine drehbar angeordnet sein. Damit kann die Länge der Beine maximal die Länge der Trägereinrichtung erreichen, ohne hierdurch die Größe des Warndreiecks im zusammengelegten Zustand zu erhöhen. Letztlich ist damit eine Standfläche von etwa 2B² möglich, wobei B die Länge der Trägereinrichtung bezeichnet.

Zur Vereinfachung des Aufbaus des erfindungsgemäßen Warndreiecks können die jeweiligen zwei Beine dieselbe Drehachse aufweisen, wobei die Drehachse durch eine Dreheinrichtung festgelegt ist, welche sich durch eine Öffnung in der Trägereinrichtung und in den jeweiligen zwei Beinen hindurch erstreckt. Vorteilhafter Weise kann diese Dreheinrichtung aus einer Hohlniete bestehen. Da eine Dreheinrichtung zur unabhängigen Drehung von jeweils zwei Beine dient, erhöht sich auch die Kompaktheit des erfindungsgemäßen Warndreiecks.

Je nach gesetzlicher Anforderung an das Warndreieck kann die Signaleinrichtung eine Reflektoreinrichtung umfassen, welche im Dreieck angeordnete Reflektorleisten aufweist.

Der Aufbau des erfindungsgemäßen Warndreiecks vereinfacht sich, wenn sich die Dreheinrichtung weiterhin in einer Öffnung durch eine Halteeinrichtung erstreckt, an welcher zumindest eine erste Reflektorleiste angebracht ist. Die Dreheinrichtung dient somit sowohl zum Drehen der Beine relativ zur Trägereinrichtung als auch zur Befestigung der Signaleinrichtung an die Trägereinrichtung. Erstreckt sich die erste Reflektorleiste im wesentlichen über die gesamte Länge der Trägereinrichtung, so kann auf die vorgeschrieben Art und Weise die erste Reflektorleiste benachbart zu beiden Enden der Trägereinrichtung an dieser befestigt sein. Dabei erstrecken sich beide Dreheinrichtungen jeweils durch eine Halteeinrichtung, wobei die erste Reflektorleiste an beiden Halteeinrichtungen befestigt ist.

Um entsprechenden Vorschriften in unterschiedlichen Ländern bezüglich der Aufstellhöhe der Signaleinrichtung zum Boden zu genügen, können sich die Beine zumindest abschnittsweise zur Trägereinrichtung in einem Winkel von 2 bis 30° erstrecken, wobei die Länge eines Beines 50 bis 100% der Länge der Trägereinrichtung betragen kann.

Um eine Schwenk-Endstellung der Beine zu definieren, kann für diese ein Anschlag vorgesehen sein, der die Drehung der Beine relativ zur Trägereinrichtung beschränkt.

Um ein Abfedern der Vorrichtung auf kurzzeitige Krafteinwirkungen zu ermöglichen und das Rutschen des Warndreiecks zu verhindern, können an den Beinen jeweils Füße aus einem gummiartigen Material vorgesehen sein, wobei ein Fuß säulenförmige Abstützeinrichtungen aufweist. Vorteilhaft kann sich der Durchmesser einer derartigen Säule zum Boden hin verringern, so daß sich eine einzelne Säule mit ihrem Ende beispielsweise in eine Lücke im Asphalt einklemmen kann, was die Stabilität des Warndreiecks auf eine äußere Krafteinwirkung weiter erhöht.

Ein unkompliziertes Zusammenlegen des Warndreiecks kann dadurch sichergestellt sein, daß benachbart zu einem Ende der ersten Reflektorleiste die zweite Reflektorleiste benachbart zu einem von deren Enden an der ersten Reflektorleiste drehbar gelagert ist. Weiterhin ist in ähnlicher Weise benachbart zum anderen Ende der ersten Reflektorleiste die dritte Reflektorleiste benachbart zu einem von deren Enden an der ersten Reflektorleiste drehbar gelagert, wobei die zweite und dritte Reflektorleiste benachbart zu deren freien Enden miteinander losbar verbindbar sind. Weiterhin kann zur zusätzlichen Signalerzeugung eine faltbare flächige Struktur umfaßt sein, die an der ersten und an der zweiten Reflektorleiste befestigt ist und im Betriebszustand, das heißt im aufgestellten Zustand des Warndreiecks im Innern des durch die Reflektorleisten gebildeten Dreiecks aufgespannt ist.

Die Erfindung wird im folgenden durch das Beschreiben einiger Ausführungsformen unter Bezugnahme auf die beiliegenden Zeichnungen erläutert, wobei
- Fig. 1: eine erfindungsgemäße Ausführungsform in Gesamtdarstellung zeigt,
- Fig. 2: die Trägereinrichtung mit eingeklappten Beinen zeigt,
- Fig. 3: die Trägereinrichtung mit ausgeklappten Beinen darstellt,
- Fig. 4: die Trägereinrichtung mit ausgeklappten Beinen auf einer Seite von oben zeigt,
- Fig. 5: im Detail in einer Schnittdarstellung die lösbare Verbindung der dritten und zweiten Reflektorleiste zeigt, und
- Fig. 6: zwei Ansichten eines Fußes des Warndreiecks darstellt.

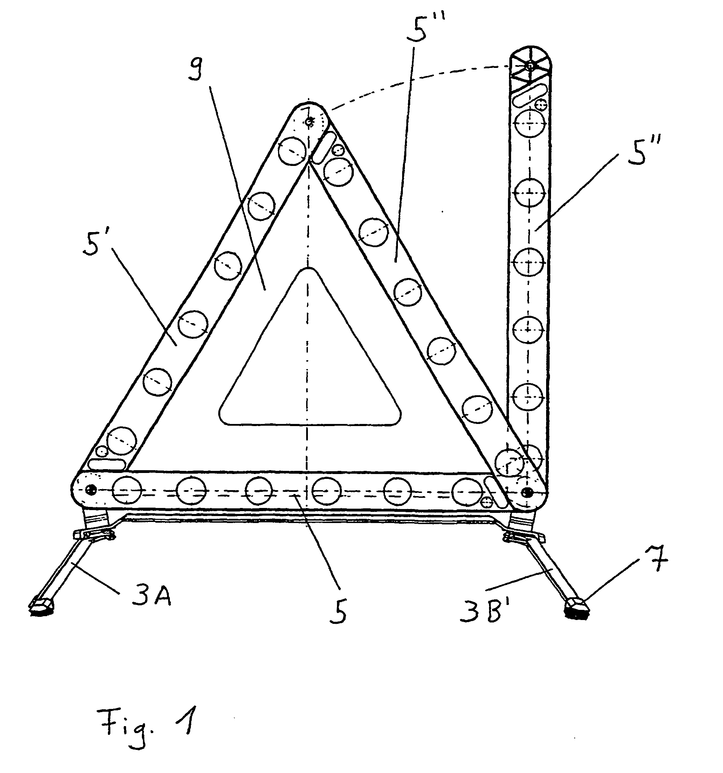

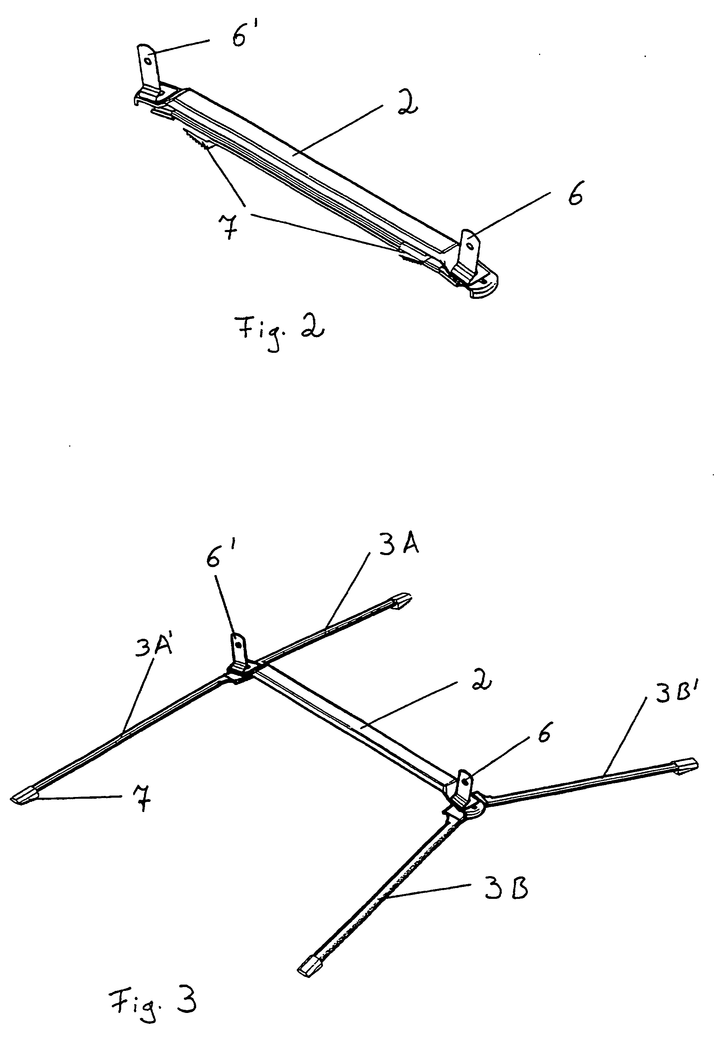

Fig. 1 zeigt eine Ausführungsform des erfindungsgemäßen zusammenlegbaren Warndreieckes. Es umfaßt eine besser in Fig. 3 sichtbare Trägereinrichtung 2, welche die Form einer langgestreckten Grundplatte einnimmt. Ferner sind vier Beine 3A, 3A', 3B, 3B' umfaßt, welche die Trägereinrichtung tragen. Wie in Fig. 1 gezeigt, ist eine Signaleinrichtung an der Trägereinrichtung befestigt. Zumindest die Trägereinrichtung und/oder die Beine des Warndreiecks sind zur Erhöhung der Bodenhaftung, das heißt zur Erzielung eines dynamischen Abtriebs, geformt. In der dargestellten Form sind die Trägereinrichtung 2 und die Beine 3A, 3A', 3B, 3B' aus einem Blech hergestellt. Zumindest abschnittsweise sind die Bauteile des erfindungsgemäßen Warndreiecks an den Rändern in Richtung der Standfläche gewölbt geformt. Diese Wölbung erzeugt bei einer angreifenden Luftströmung eine Normalenkraft in Richtung der Standfläche, so daß sich die Standfestigkeit erhöht. Die Trägereinrichtung und die Beine können aus einem Blech herausgestanzt und gleichzeitig, d.h im selben Arbeitsgang in die vorgegebene Form gebracht werden. Demnach sind für die Herstellung des erfindungsgemäßen Warndreiecks für diese Ausführungsform nur 5 Stanzteile notwendig.

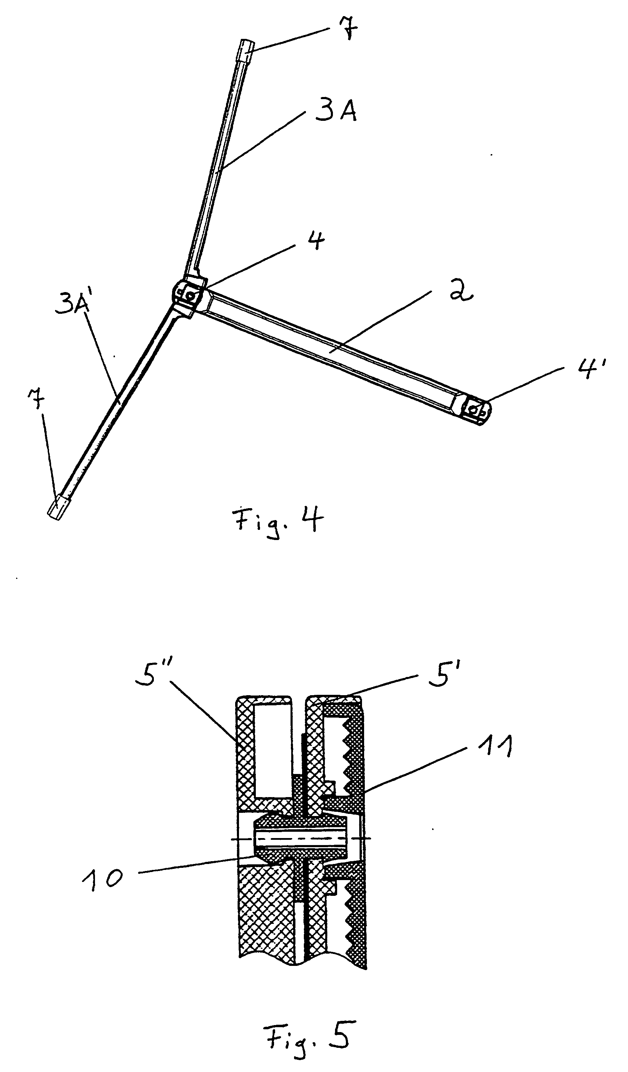

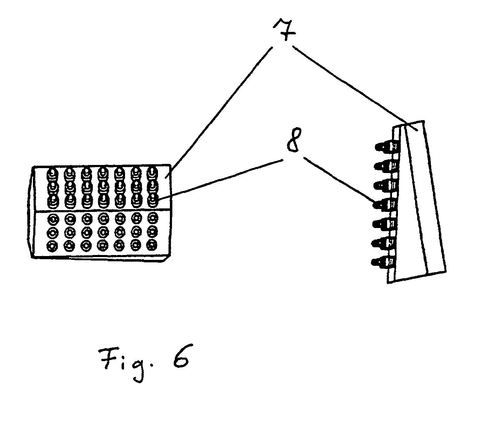

Die beschriebenen erfindungsgemäßen Ausführungsformen weisen an den Enden der Trägereinrichtung jeweils zwei drehbare Beine auf, welche dieselbe Drehachse, siehe Fig. 4, besitzen. Die jeweiligen Drehachsen werden dabei durch eine Dreheinrichtung 4, 4' festgelegt, die sich durch ein Loch am Ende der Trägereinrichtung 2 und durch Öffnungen am Ende der zwei Beine 3A, 3A' bzw. 3B, 3B' hindurch erstreckt. In einer Ausführungsform der Erfindung sind diese Dreheinrichtungen jeweils Hohlnieten. Zur Halterung der Signaleinrichtung erstreckt sich die Dreheinrichtung jeweils durch eine Halteeinrichtung 6, 6', siehe beispielsweise Fig. 2 und Fig. 3. Diese Halteeinrichtungen sind aus einem Blechband geformt und weisen benachbart zu den jeweiligen Enden Löcher auf, über welche die Halteeinrichtungen jeweils zum einen an der Trägereinrichtung befestigt sind und zum anderen an eine erste Reflektorleiste 5, welche von der Signaleinrichtung umfaßt ist, siehe Fig. 1. Eine Reflektorleiste weist in der beschriebenen Ausführungsform einen flachen Grundkörper aus Kunststoff auf (s. Fig. 1), auf welchen ein im wesentlichen gleich dimensionierter Reflektor 11 (s. Fig. 5) aufgeklebt ist. Die Reflektorleiste 5 ist dabei jeweils mittels einer Niete an den Halteeinrichtungen 6, 6' befestigt. Im Bereich des Drehpunktes weisen die Beine eine Breite auf, die im wesentlichen der Breite der Trägereinrichtung entspricht, wobei die Beine in diesem Abschnitt parallel zur Trägereinrichtung verlaufen. Etwa 3cm vom jeweiligen Drehpunkt entfernt verjüngen sich die Beine in ihrer Breite um das Zusammenklappen der vier Beine unter die Trägereinrichtung zu ermöglichen, siehe Fig. 2 und 3. Demnach liegen die Beine im zusammengeklappten Zustand derartig unter der Trägereinrichtung, daß sich die Beine 3A und 3B gegenüberliegen, welche am Drehpunkt direkt an der Trägereinrichtung anliegen. Weiterhin stehen sich im zusammengeklappten Zustand die Beine 3A' und 3B' gegenüber, welche nicht mit der Trägereinrichtung direkt in Kontakt stehen, sondern unterhalb der erstgenannten Beine drehbar gelagert sind. Auf diese Weise wird auch im zusammengeklappten Zustand die Tiefe des Warndreiecks allein durch die Tiefe der Trägereinrichtung festgelegt.

Zur Festlegung einer vorbestimmten Stellhöhe des Warndeiecks sind die schmalen Beinabschnitte relativ zum Abschnitt in der Nähe des Drehpunktes zur Standfläche hin abgewinkelt. Dieser Winkel hängt je nach Ausführungsform von der Länge der Beine ab. In der in Fig. 3 dargestellten Ausführungsform der Erfindung, bei welcher die Länge der Beine etwa 80 % der Länge der Trägereinrichtung beträgt, ist dieser Winkel beispielhaft 10°. In anderen Ausführungsformen der Erfindung kann dieser Winkel 3 bis 30° und die Länge der Beine 50 bis 100 % der Länge der Trägereinrichtung umfassen.

Die Trägereinrichtung 2 weist ferner jeweils an ihren beiden Enden in der Längsrichtung eine nach unten abstehende Nase auf, welche als Anschlag zur Definierung einer Schwenk-Endstellung der Beine 3A, 3A', 3B, 3B' dient. Hierfür besitzen die jeweiligen Beine benachbart zum Drehpunkt eine Ausnehmung auf ihrem Umfang, welche den möglichen Drehwinkel festlegt. Der beschriebene Anschlag ragt in die Ausnehmung hinein, so daß der mögliche Drehwinkel eines Beins durch den Anschlag der Nase gegen ein erstes Ende der Ausnehmung und den Anschlag der Nase gegen ein zweites Ende der Ausnehmung definiert und beschränkt wird, wodurch die beiden Grenzstellungen eines jeden Beins festgelegt sind. In der beschriebenen Ausführungsform entsprechen die beiden Grenzstellungen einem Winkel von 0° (im zusammengelegten Zustand) beziehungsweise von 100° (im Betriebszustand) des jeweiligen Beins zur Trägereinrichtung.

Zur weiteren Erhöhung der Standsicherheit weist die beschrieben Ausführungsform des erfindungsgemäßen Warndreiecks an den jeweiligen Beinen einen Fuß 7 aus Gummi auf, der in Fig. 6 in zwei Ansichten dargestellt ist. Der Fuß 7 wird auf das jeweilige Bein 3A, 3A', 3B, 3B' aufgesteckt und umfaßt säulenförmige Abstützeinrichtungen in Form von Noppen, deren Durchmesser in Richtung zur Standfläche abschnittsweise kleiner wird. Im nicht belasteten Zustand liegen die Enden der Noppen entlang der Breite des Fußes auf einer gekrümmten Linie, so daß sich der Fuß Unregelmäßigkeiten in der Unterlage anpassen kann. Die Noppen weisen in der beschriebenen Ausführungsform eine Länge von etwa 6 mm und einen maximalen Durchmesser von 3 mm auf.

Wie oben stehend beschrieben, ist die erste Reflektorleiste 5 über die beiden Halteeinrichtungen 6, 6' an der Trägereinrichtung 2 befestigt. An den jeweiligen Haltepunkten sind weiterhin die zweite und dritte Reflektorleiste 5', 5'' benachbart zu einem von deren freien Enden mittels einer Niete drehbar gelagert, s. Fig. 1. Die Befestigung der zweiten und dritten Reflektorleiste ist derart, daß im zusammengelegten Zustand die erste Reflektorleiste 5 zwischen der zweiten Reflektorleiste 5' und der dritten Reflektorleiste 5'' liegt.

Weiterhin ist die Dicke der Reflektorleisten so eingestellt, daß im zusammengeklappten Zustand die nebeneinanderliegenden Reflektorleisten eine Abmessung aufweisen, die der Tiefe der Trägereinrichtung 2 entspricht, was die Bautiefe des erfindungsgemäßen Warndreiecks optimiert und beispielsweise zusammen mit der obenbeschriebenen Gestaltung der Beine zur Kompaktheit der Vorrichtung beiträgt.

Die zweite und dritte Reflektorleiste 5', 5'' sind benachbart zu deren freien Enden miteinander lösbar verbindbar. Zur Verdeutlichung ist in Fig. 1 die Reflektorleiste 5'' doppelt dargestellt; einmal im Betriebszustand und zum zweiten in einem Zustand, bei welchem sie nicht mit der zweiten Reflektorleiste 5' verbunden ist. Die lösbare Verbindung ist im Schnitt in einer Detailzeichnung in Fig. 5 dargestellt. Verwendung findet ein Einsatz 10, der mit der zweiten Reflektorleiste 5' mittels einer Rastung im wesentlichen unlösbar verbunden ist. Die dritte Reflektorleiste 5'' kann auf den Einsatz 10 in einem Loch aufgeschoben werden. Dabei sind dieses Loch in der dritten Reflektorleiste 5'' und die entsprechenden Abschnitte des Einsatzes als lösbare Rasteinrichtung ausgebildet.

Je nach Anforderung kann das erfindungsgemäße Warndreieck auch eine faltbare flächige Struktur umfassen, welche zusätzlich zu den Reflektorleisten 5, 5', 5'' eine Warnfunktion ausübt. Diese flächige Struktur ist an der ersten und an der zweiten Reflektorleiste, vorteilhafter Weise an den schon beschriebenen Befestigungsstellen der ersten Reflektorleiste und an der zweiten Reflektorleiste mittels des beschriebenen Einsatzes befestigt. Je nach Einsatzort des erfindungsgemäßen Warndreiecks kann die faltbare flächige Struktur, beispielsweise in Form einer widerstandsfähigen Kunststoff-Folie verschiedene Warnhinweise aufweisen.

In einer bestimmten Ausführungsform für die Vereinigten Staaten umfaßt das erfindungsgemäße Warndreieck ferner eine optische Warnblinkanzeige.

## Patentansprüche

1. Zusammenlegbares Warndreieck (1) umfassend
eine Trägereinrichtung (2) in Form einer langgestreckten Grundplatte,
Beine (3A, 3A', 3B, 3B'), welche die Trägereinrichtung tragen, und eine Signaleinrichtung, die an der Trägereinrichtung befestigt ist,
wobei die Trägereinrichtung (2) ein Blech umfasst, welches zumindest abschnittsweise an den Rändern zur Erhöhung der Bodenhaftung gewölbt geformt ist und wobei
benachbart zu beiden Enden der Trägereinrichtung jeweils zwei Beine (3A, 3A'; 3B, 3B') drehbar angeordnet sind, **dadurch gekennzeichnet, daß** die jeweils zwei Beine an einem Ende dieselbe Drehachse aufweisen.

2. Warndreieck nach Anspruch 1,
**dadurch gekennzeichnet, daß** die Beine (3A, 3A', 3B, 3B') jeweils ein Blech umfassen, welches zumindest abschnittsweise an den Rändern gewölbt geformt ist.

3. Warndreieck nach Anspruch 1 oder 2,
**dadurch gekennzeichnet, daß** die Drehachse durch eine Dreheinrichtung (4, 4') festgelegt ist, welche sich durch eine Öffnung in der Trägereinrichtung (2) und den jeweiligen zwei Beinen (3A, 3A'; 3B, 3B') hindurch erstreckt.

4. Warndreieck nach einem der vorstehenden Ansprüchen,
**dadurch gekennzeichnet, daß** die Dreheinrichtung eine Hohlniete ist.

5. Warndreieck nach einem der vorstehenden Ansprüche,
**dadurch gekennzeichnet, daß** die Signaleinrichtung eine Reflektoreinrichtung umfaßt, welche im Dreieck angeordnete Reflektorleisten (5, 5', 5'') aufweist.

6. Warndreieck nach Anspruch 5,
**dadurch gekennzeichnet, daß** die Dreheinrichtung (4, 4') sich weiterhin in einer Öffnung durch eine Halteeinrichtung (6, 6') erstreckt, an welcher zumindest eine erste Reflektorleiste (5) angebracht ist.

7. Warndreieck nach Anspruch 6,
**dadurch gekennzeichnet, daß** sich die erste Reflektorleiste (5) im wesentlichen über die gesamte Länge der Trägereinrichtung (2) erstreckt.

8. Warndreieck nach Anspruch 6 und 7,
**dadurch gekennzeichnet, daß** sich beide Dreheinrichtungen (4, 4') jeweils durch eine Halteeinrichtung (6, 6') erstrecken, wobei die erste Reflektorleiste (5) an beiden Halteeinrichtungen (6, 6') befestigt ist.

9. Warndreieck nach einem der vorstehenden Ansprüche,
**dadurch gekennzeichnet, daß** zur Festlegung einer vorbestimmten Stellhöhe des Warndreiecks die Beinabschnitte relativ zum Abschnitt in der Nähe des Drehpunktes zur Standfläche hin abgewinkelt sind, so dass sich die Beine (3A, 3A'; 3B, 3B') zur Trägereinrichtung (2) in einen Winkel von 3 - 30° erstrecken.

10. Warndreieck nach einem der vorstehenden Ansprüche,
**dadurch gekennzeichnet, daß** die Länge eines Beins 50 bis 100% der Länge der Trägereinrichtung beträgt.

11. Warndreieck nach einem der vorstehenden Ansprüche,
**dadurch gekennzeichnet, daß** für die Beine (3A, 3A', 3B, 3B') jeweils ein Anschlag vorgesehen ist, der die Drehung der Beine relativ zur Trägereinrichtung (2) beschränkt.

12. Warndreieck nach einem der vorstehenden Ansprüche,
**dadurch gekennzeichnet, daß** an den Beinen jeweils ein Fuß (7) aus einem gummiartigen Material vorgesehen ist, wobei der Fuß säulenförmige Abstützeinrichtungen (8) umfaßt, mit welchen sich ein Bein vom Boden abstützt.

13. Warndreieck nach einem der vorstehenden Ansprüche 5 bis 12, **dadurch gekennzeichnet, daß**
benachbart zu einem Ende der ersten Reflektorleiste (5) die zweite Reflektorleiste (5') benachbart zu einem von deren Enden an der ersten Reflektorleiste drehbar gelagert ist, und
benachbart zum anderen Ende der ersten Reflektorleiste die dritte Reflektorleiste (5'') benachbart zu einem von deren Enden an der ersten Reflektorleiste drehbar gelagert ist, wobei die zweite und dritte Reflektorleisten benachbart zu deren freien Enden miteinander lösbar verbindbar sind.

14. Warndreieck nach Anspruch 13,
**dadurch gekennzeichnet, daß** eine faltbare flächige Struktur (9) umfaßt ist, die an der ersten und an der zweiten Reflektorleiste befestigt ist und im Betriebszustand des Warndreiecks im Inneren des durch die Reflektorleisten gebildeten Dreiecks aufgespannt ist.

15. Warndreieck nach einem der vorstehenden Ansprüche,
**dadurch gekennzeichnet, daß** Trägereinrichtung (2) und/oder Beine (3A, 3A', 3B, 3B') Stanzteile sind.

16. Warndreieck nach einem der vorstehenden Ansprüche,
**dadurch gekennzeichnet, daß** eine Warnblinkanzeige umfaßt ist.

## Claims

1. Collapsible warning triangle (1) comprising
a support device (2) in the form of an elongated base plate,
legs (3A, 3A', 3B, 3B') which carry the support device, and
a signal device which is fixed to the support device,
wherein the support device (2) comprises a sheet which is formed so as to be bent at least in sections at the edges in order to increase the road holding and wherein two legs (3A, 3A', 3B, 3B') in each case are arranged in a rotatable way adjacently at each of the two ends of the support device, **characterised in that** the two legs at an end in each case have the same rotation axis.

2. Warning triangle according to claim 1,
**characterised in that** each of the legs (3A, 3A', 3B, 3B') comprises a sheet which is formed so as to be bent at least in sections at the edges.

3. Warning triangle according to claim 1 or 2,
**characterised in that** the rotation axis is fixed by a rotation device (4, 4') which extends through an opening in the support device (2) and the two legs (3A, 3A'; 3B, 3B') in each case.

4. Warning triangle according to one of the preceding claims, **characterised in that** the rotation device is a hollow rivet.

5. Warning triangle according to one of the preceding claims, **characterised in that** the signal device comprises a reflector device which has reflector strips (5, 5'. 5'') arranged in the triangle.

6. Warning triangle according to claim 5,
**characterised in that** the rotation device (4, 4') furthermore extends in an opening through a retaining device (6, 6'), on which at least a first reflector strip (5) is arranged.

7. Warning triangle according to claim 6,
**characterised in that** the first reflector strip (5) extends essentially over the whole length of the support device (2).

8. warning triangle according to claim 6 and 7,
**characterised in that** each of the two rotation devices (4, 4') extends through a retaining device (6, 6') wherein the first reflector strip (5) is fixed to the two retaining devices (6, 6').

9. Warning triangle according to one of the preceding claims, **characterised in that** for the purpose of fixing a pre-determined adjustment height of the warning triangle the leg sections are angled down relatively to the section in proximity to the rotation point towards the standing area with the result that the legs (3A, 3A'; 3B, 3B') extend at an angle of 3 - 30° to the support device (2).

10. Warning triangle according to one of the preceding claims, **characterised in that** the length of a leg represents 50 to 100% of the length of the support device.

11. Warning triangle according to one of the preceding claims, **characterised in that** a stop is provided for each of the legs (3A, 3A', 3B, 3B'), said stop restricting the rotation of the legs relatively to the support device (2).

12. Warning triangle according to one of the preceding claims, **characterised in that** a foot (7) made of a rubber-type material is provided on each of the legs wherein the foot has support devices (8) in the form of pillars, with which a leg supports itself from the ground.

13. Warning triangle according to one of the preceding claims 5 to 12, **characterised in that**
adjacent to one end of the first reflector strip (5) the second reflector strip (5') is rotatably mounted adjacent at one of its ends to the first reflector strip, and adjacent to the other end of the first reflector strip the third reflector strip (5'') is rotatably mounted adjacent at one of its ends to the first reflector strip wherein the second and third reflector strips are adapted to be interconnected in a releasable way adjacently at their free ends.

14. Warning triangle according to claim 13,
**characterised in that** a foldable planar structure (9) is incorporated which is fixed to the first and to the second reflector strip and in the operating state of the warning triangle is set inside the triangle formed by the reflector strips.

15. Warning triangle according to one of the preceding claims, **characterised in that** the support device (2) and / or legs (3A, 3A', 3B, 3B') are stamped consonants.

16. Warning triangle according to one of the preceding claims, **characterised in that** a flashing warning display is incorporated.

## Revendications

1. Triangle de signalisation pliable (1) comprenant un système de support (2) en forme de plaque de base de grande longueur, des montants (3A, 3A' ; 3B, 3B') qui soutiennent le système de support et un dispositif de signalisation qui est fixé au système de support, le système de support (2) comprenant une tôle qui - du moins partiellement - est formée de façon incurvée au niveau des bords afin d'accroître l'adhérence au sol et deux montants (3A, 3A' 3B, 3B') étant respectivement agencés au voisinage des deux extrémités du système de support de façon à pouvoir pivoter ; **caractérisé en ce que** les deux montants au niveau de chaque extrémité présentent respectivement le même axe de rotation.

2. Triangle de signalisation selon la revendication 1, **caractérisé en ce que** les montants (3A, 3A' ; 3B, 3B') comprennent respectivement une tôle qui - du moins partiellement - est formée de façon incurvée au niveau des bords.

3. Triangle de signalisation selon la revendication 1 ou 2, **caractérisé en ce que** l'axe de rotation est déterminé par un dispositif de rotation (4, 4') qui s'étend à travers une ouverture dans le système de support (2) et les deux montants respectifs (3A, 3A' ; 3B, 3B').

4. Triangle de signalisation selon l'une des revendications précédentes, **caractérisé en ce que** le dispositif de rotation est un rivet creux.

5. Triangle de signalisation selon l'une des revendications précédentes, **caractérisé en ce que** le dispositif de signalisation comprend un dispositif réfléchissant qui présente des barres réfléchissantes (5, 5', 5'') logées dans le triangle.

6. Triangle de signalisation selon la revendication 5, **caractérisé en ce que** le dispositif de rotation (4, 4') s'étend également dans une ouverture traversant un dispositif d'ancrage (6, 6') auquel est fixée au moins une première barre réfléchissante (5).

7. Triangle de signalisation selon la revendication 6, **caractérisé en ce que** la première barre réfléchissante (5) s'étend essentiellement sur toute la longueur du système de support (2).

8. Triangle de signalisation selon les revendications 6 et 7, **caractérisé en ce que** les deux dispositifs de rotation (4, 4') s'étendent respectivement à travers un dispositif d'ancrage (6, 6'), la première barre réfléchissante (5) étant fixée aux deux dispositifs d'ancrage (6, 6').

9. Triangle de signalisation selon l'une des revendications précédentes, **caractérisé en ce que** pour obtenir une hauteur de pose prédéfinie du triangle de signalisation, les sections des montants sont, par rapport à la section située à proximité du point de rotation, incurvées vers la surface d'appui de sorte que les montants (3A, 3A' ; 3B, 3B') s'étendent par rapport au système de support (2) suivant un angle de 3 à 30°.

10. Triangle de signalisation selon l'une des revendications précédentes, **caractérisé en ce que** la longueur d'un montant représente 50 à 100 % de la longueur du système de support.

11. Triangle de signalisation selon l'une des revendications précédentes, **caractérisé en ce qu'**une butée est respectivement prévue pour les montants (3A, 3A' ; 3B, 3B'), cette butée limitant la rotation des montants par rapport au système de support (2).

12. Triangle de signalisation selon l'une des revendications précédentes, **caractérisé en ce qu'**un pied (7) réalisé en un matériau de type caoutchouc est respectivement prévu au niveau des montants, ce pied comprenant des dispositifs d'appui en forme de colonnes (8) qui permettent aux montants d'être maintenus à distance du sol.

13. Triangle de signalisation selon l'une des revendications précédentes 5 à 12, **caractérisé en ce qu'**au voisinage de l'une des extrémités de la première barre réfléchissante (5), la deuxième barre réfléchissante (5') est logée de façon à pouvoir pivoter, au voisinage de l'une de ses extrémités, par rapport à la première barre réfléchissante, et **en ce qu'**au voisinage de l'autre extrémité de la première barre réfléchissante (5), la troisième barre réfléchissante (5'') est logée de façon à pouvoir pivoter, au voisinage de l'une de ses extrémités, par rapport à la première barre réfléchissante, les deuxième et troisième barres réfléchissantes pouvant être assemblées l'une à autre de façon amovible au voisinage de leurs extrémités libres.

14. Triangle de signalisation selon la revendication 13, **caractérisé en ce qu'**il comprend une structure large et pliable (9) qui est fixée aux première et deuxième barres réfléchissantes et qui, lorsque le triangle de signalisation est en mode de fonctionnement, est déployée à l'intérieur du triangle formé par les barres réfléchissantes.

15. Triangle de signalisation selon l'une des revendications précédentes, **caractérisé en ce que** le système de support (2) et/ou les montants (3A, 3A' ; 3B, 3B') sont des pièces estampées.

16. Triangle de signalisation selon l'une des revendications précédentes, **caractérisé en ce qu'**il comprend un témoin d'alerte clignotant.
